# EUROPEAN PATENT APPLICATION

(11) **EP 4 431 260 A1**
(43) Date of publication of application: **18.09.2024**
(21) Application number: 21964188.3
(22) Date of filing: 16.11.2021
(51) Int. Cl.: B29C 45/14, B29C 45/26, B29C 45/04

(54) **SUPPORT MANUFACTURING METHOD, SUPPORT, AND SUPPORT MANUFACTURING APPARATUS USING MOLD**

(30) Priority: 12.11.2021 KR 20210155861
(71) Applicant: LG Electronics Inc., Yeongdeungpo-gu Seoul 07336 (KR)
(72) Inventor: LEE, Youngil, Seoul 06772 (KR); NA, Siwang, Seoul 06772 (KR); KIM, Taeho, Seoul 06772 (KR); KIM, Taegeun, Seoul 06772 (KR); WOO, Jaechun, Seoul 06772 (KR); KIM, Sangsik, Seoul 06772 (KR)
(74) Representative: Vossius & Partner Patentanwälte Rechtsanwälte mbB
(86) International application number: PCT/KR2021/016720
(87) International publication number: WO 2023/085478

(57) **Abstract**

According to embodiments, provided is a support manufacturing method comprising the steps of: forming a first injection-molded product by using a first material; injecting a second material into at least a portion of the first injection-molded product; forming a second injection-molded product including a hollow by discharging the second material from the first injection-molded product; and forming a third injection-molded product by covering at least a portion of the outer surface of the second injection-molded product with a third material.

## Description

### [Technical Field]

The present disclosure relates to a method for manufacturing a support, the support, and an apparatus for manufacturing the support, and more particularly to a method for manufacturing a support through an injection method using a mold, a support manufactured using the mold, and a support manufacturing apparatus designed to use the mold.

### [Background Art]

Electronic devices such as televisions (TVs), desktop personal computers (PCs), etc. have evolved into improved devices that are designed to include more functions while becoming thinner at the same time. Recently, as technology has been developed, not only the function of the electronic device but also the appearance of the electronic device have emerged as important factors.

Accordingly, the importance of the function and appearance of a device (hereinafter referred to as a support) for facilitating mounting (or holding) and/or supporting of electronic devices is also increasing.

The support is required to be stable in terms of function, for example, to mount/support an electronic device, and to be light in preparation for movement from one place to another place. In addition, the support is required to reflect pre-designed design elements in terms of appearance, for example, to be formed smoothly without leaving any rough traces of a fabrication process. Furthermore, in order to facilitate mass production, the unit cost of the support needs to be reduced.

Meanwhile, an injection process using a mold is currently used to manufacture the support. For the injection process, for example, a general injection process, a water injection technology (WIT) process, a double injection process, etc. have been used.

However, for example, a general injection process or a double injection process may have problems in that the manufacturing efficiency of the support is deteriorated due to a long cooling time generated after the injection process. In addition, for example, the WIT process may have problems in that it has difficulty in controlling and maintaining pressure of injected water and shrinkage defects caused by thickness deviation of an injection target occur.

### [Disclosure]

### [Technical Problem]

An object of the present disclosure is to provide a method for manufacturing a support, the support, and an apparatus for manufacturing the support that substantially obviate one or more problems due to limitations and disadvantages of the related art.

Another object of the present disclosure is to provide a method for manufacturing a support that is lightweight and can shorten a cooling time, the support, and an apparatus for manufacturing the support.

Another object of the present disclosure is to provide a method for manufacturing a support, the support, and an apparatus for manufacturing the support, that can improve appearance defects of the support even when there is a thickness deviation in the support.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### [Technical Solutions]

In order to solve the above-described problems, the embodiments may provide a support manufacturing method including a composite injection process of combining a primary injection process and a secondary injection process, the support manufactured by the composite injection process, and an apparatus for manufacturing the support designed to use a composite injection process.

In accordance with an aspect of the present disclosure, a method for manufacturing a support may include: forming a first injection-molded product using a first material; injecting a second material into at least a portion of the interior of the first injection-molded product; forming a second injection-molded product having a hollow by discharging the second material; and forming a third injection-molded product by covering at least a portion of an outer surface of the second injection-molded product with a third material.

The second injection-molded product may include a hole. The forming the hollow may include injecting the second material into at least a portion of the interior of the first injection-molded product; and if at least a portion of the first injection-molded product overflows from the first injection-molded product according to injection of the second material, discharging at least a portion of the first material through the hole.

The second injection-molded product is formed such that a support portion supporting the second injection-molded product corresponds to a first mold. The forming the third injection-molded product may include: rotating the support portion formed with the second injection-molded product by a preset angle so as to allow the second injection-molded product to correspond to a second mold; and injecting the third material into the second mold so as to cover at least a portion of the outer surface of the second injection-molded product.

A rotation unit may be connected to a first mold corresponding to the second injection-molded product and a second mold corresponding to the third injection-molded product. The forming the third injection-molded product may include: rotating, by the rotation unit, the second injection-molded product corresponding to the first mold such that the rotated second injection-molded product corresponds to the second mold; and injecting the third material into the second mold to cover at least a portion of the outer surface of the second injection-molded product.

The first mold may be formed to correspond to the second injection-molded product, and the second mold may be formed to correspond to the third injection-molded product. The forming the third injection-molded product may include: inserting the second injection-molded product into the second mold; and injecting the third material into the second mold to cover at least a portion of the outer surface of the second injection-molded product.

The third material may be formed to cover at least a portion of the outer surface of the second injection-molded product including the hollow.

Injection of the second material may be performed at a first height with respect to the first injection-molded product; and discharge of the second material may be performed at a second height with respect to the third injection-molded product, wherein the first height and the second height are equal to each other.

The second material may be different from the first material and the third material, wherein the first material is the same as or different from the third material.

In accordance with another aspect of the present disclosure, a support may include: a first layer including a first resin, and configured to have a hollow therein; and a second layer including a second resin, and configured to surround at least a portion of an outer surface of the first layer.

The first layer may include a hole, one side of which is connected to the hollow and the other side of which is blocked by the second layer.

The first layer may include a plurality of protrusions, each of which has a preset size or less on at least a portion of a surface where the first layer and the second layer are in contact with each other;

A surface of a side where the second layer is not in contact with the first layer has a flatness equal to or greater than a preset value.

The support may further include an adhesive layer disposed between the first layer and the second layer so as to bond the first layer and the second layer to each other.

In a cross-section perpendicular to a direction of the hollow, the first layer has a first thickness at a first position, and the first layer has a second thickness at a second position, wherein the first thickness and the second thickness are equal to each other.

In accordance with another aspect of the present disclosure, an apparatus for manufacturing a support may include: a mold formed to include a first mold having a shape of the support having a first size and a second mold having a shape of the support having a second size larger than the first size; a first injection unit configured to inject a first material into the first mold; an injection unit configured to inject a second material into at least a portion of the interior of the first material at a first height and to discharge the second material from at least a portion of the interior of the first material at a second height equal to the first height; and a second injection unit configured to inject a third material into the second mold to surround at least a portion of an outer surface of the first material..

### [Advantageous Effects]

As is apparent from the above description, embodiments may provide a support manufacturing method for efficiently manufacturing a support, the efficiently manufactured support, and an apparatus for manufacturing the support.

Embodiments may provide a method for manufacturing a light high-strength support, a support, and an apparatus for manufacturing the support.

Embodiments may provide a method for manufacturing a support with improved appearance defects, a support, and an apparatus for manufacturing the support.

The support manufactured according to the embodiments may have an aesthetically pleasing appearance.

Effects obtainable from the present embodiments are not limited by the above mentioned effects, and other unmentioned effects can be clearly understood from the above description by those having ordinary skill in the technical field to which the present disclosure pertains.

### [Description of Drawings]

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a schematic diagram illustrating an example of supporting a multimedia device using a support according to embodiments of the present disclosure.
FIG. 2 is a flowchart illustrating a method for manufacturing a support according to embodiments of the present disclosure.
FIGS. 3(a) to 3(c) are views illustrating examples of a process of forming a first injection-molded product and a second injection-molded product according to embodiments of the present disclosure.
FIGS. 4(a) to 4(c) are cross-sectionals views illustrating examples of a first injection-molded product and a second injection-molded product formed according to embodiments of the present disclosure.
FIG. 5 is a view illustrating an example of forming a hollow included in the support according to embodiments of the present disclosure.
FIGS. 6(a) and 6(b) are cross-sectional views illustrating examples of a third injection-molded product formed according to embodiments of the present disclosure.
FIGS. 7(a) and 7(b) are views illustrating examples of a process of forming a third injection-molded product according to embodiments of the present disclosure.
FIG. 8 is a view illustrating an example of a process of forming a third injection-molded product according to embodiments of the present disclosure.
FIG. 9 is a view illustrating an example of a process of forming a third injection-molded product according to embodiments of the present disclosure.
FIGS. 10(a) and 10(b) are enlarged views of the portion "A" shown in FIG. 6 according to embodiments of the present disclosure.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function.

In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another. It will be understood that when an element is referred to as being "connected with" another element, the element can be directly connected with the other element or intervening elements may also be present.

In contrast, when an element is referred to as being "directly connected with" another element, there are no intervening elements. A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

The term "mold" (also referred to as a metallic pattern or a metallic mold) described in the present specification may refer to a frame required for mass-producing products with the same or similar specifications. The mold may be designed to use, for example, aluminum alloy, copper alloy, cast iron, etc. For example, the mold may be used for plastic injection molding. The term "mold" may be used interchangeably with a formwork, a frame, a metallic mold, or the like.

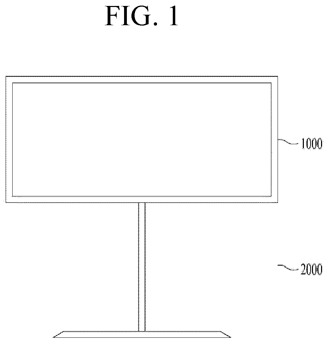

FIG. 1 is a schematic diagram illustrating an example of supporting a multimedia device using a support according to embodiments of the present disclosure.

Referring to FIG. 1, a reference number 1000 may be a support object held and/or supported by a support 2000 according to embodiments. In addition, a reference numeral 2000 may be a support for holding and/or supporting the support object 1000.

The support object 1000 is, for example, an electronic device. The electronic device may be, for example, a smartphone, a laptop, a digital broadcasting terminal, a personal digital assistant (PDA), a portable multimedia player (PMP), a navigation system, a slate PC, a tablet, an ultrabook, a digital TV, a desktop computer, and the like.

In FIG. 1, a display screen of a television (TV) is shown as an example of a support object 1000. However, unlike what is shown in FIG. 1, the support object 1000 is not limited to such electronic devices.

The support object 1000 may include all objects that are fixed, mounted (or held), and/or supported by the support 2000, such as clothes or decorations. In addition, the support object 1000 may be another support having the same or similar function as the support 2000. In this case, the support 2000 may function as a portion of a frame formed by combining the support 2000 with another support.

The support 2000 according to embodiments is a structure that fixes or supports the support object 1000 such as an electronic device.

The support 2000 may be coupled to or connected to the support object 1000 to be exposed to the outside. Accordingly, when designing the support 2000, it is necessary to design the support 2000 from an aesthetic perspective. The support 2000 is an industrial product and may require mass production. Therefore, the support 2000 is required to be mass-produced quickly while reducing material costs. Additionally, the support 2000 is required to be relatively light for ease of manufacture and movement. In addition, the support 2000 is required to have high strength in order to stably fix, hold (or mount), and/or support the support object 1000.

The support 2000 satisfying such demands is needed. Therefore, a method for manufacturing the support 2000, the support 2000, and an apparatus for manufacturing the support 2000 according to the embodiments of the present disclosure will hereinafter be described with reference to the attached drawings.

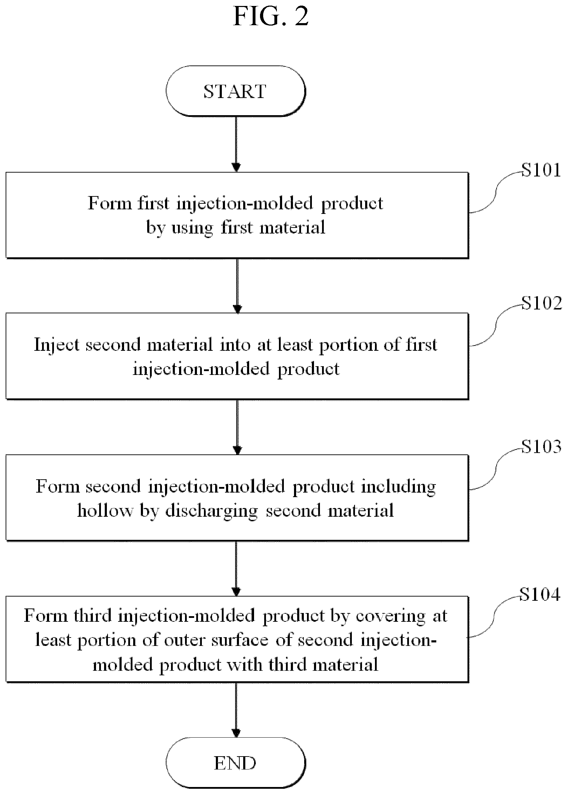

FIG. 2 is a flowchart illustrating a method for manufacturing a support according to embodiments of the present disclosure.

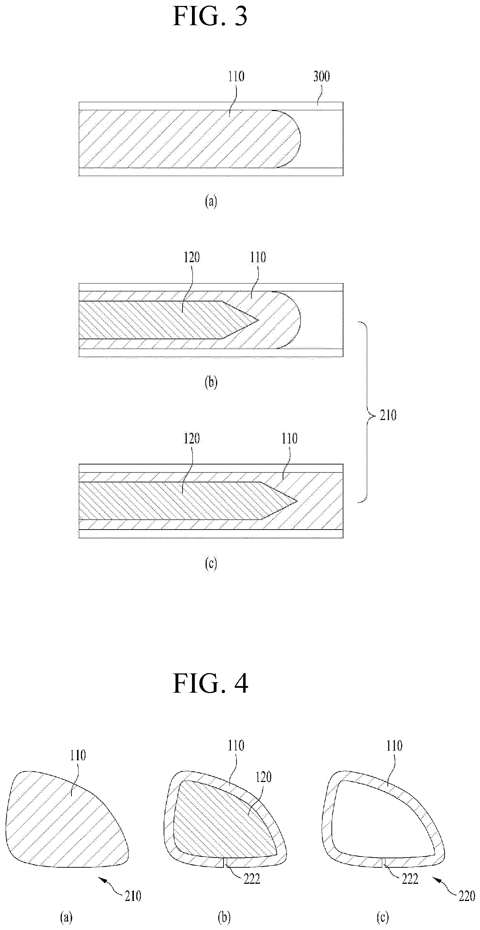

FIGS. 3(a) to 3(c) are views illustrating examples of a process of forming a first injection-molded product and a second injection-molded product according to embodiments of the present disclosure.

FIGS. 4(a) to 4(c) are cross-sectionals views illustrating examples of a first injection-molded product and a second injection-molded product formed according to embodiments of the present disclosure.

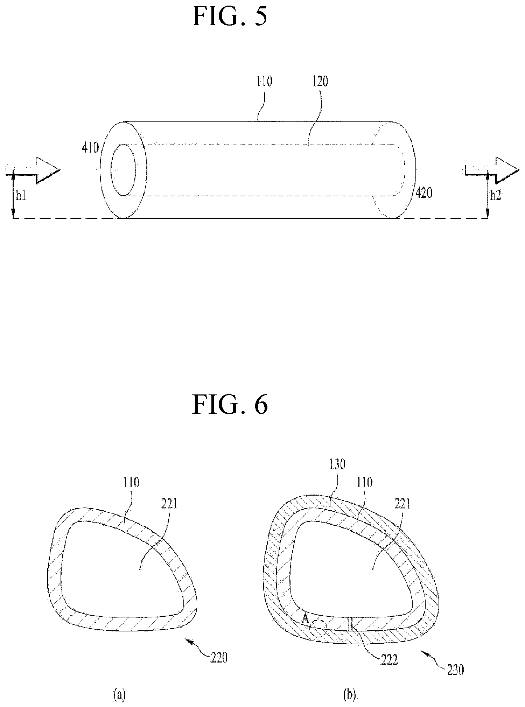

FIG. 5 is a view illustrating an example of forming a hollow included in the support according to embodiments of the present disclosure.

FIGS. 6(a) and 6(b) are cross-sectional views illustrating examples of a third injection-molded product formed according to embodiments of the present disclosure.

FIG. 2 is a flowchart illustrating a method for manufacturing the support 2000 described in FIG. 1.

Referring to FIG. 2, the support manufacturing method may include forming a first injection-molded product 210 using a first material 110 (S101). FIG. 3(a) shows the process of forming the first injection-molded product 210. FIG. 3(a) shows the step S101 shown in FIG. 2.

As shown in (a) of FIG. 3, the forming the first injection-molded product 210 may include forming the first material 110 by injecting the first material 110 into the mold 300.

At this time, the first material 110 is, for example, resin. The first material 110 is, for example, polypropylene (PP), ABS (acrylonitrile, butadiene, styrene), PA6/66 (polyamide6/66), POM, PPF, polyethylene (PE), polycarbonate (PC), polystyrene (PS), PMMA (polymethyl methacrylate), etc., or a mixture of two or more thereof.

FIG. 4(a) is a cross-sectional view illustrating the first injection-molded product 210 formed through the above-described process. In this way, the support 2000 may be formed only through step S101. However, in this case, there is a problem that the cycle time is long due to a long cooling time, and the efficiency of fabrication is deteriorated. In addition, the first inj ection-molded product 210 requires a large amount of the first material 110, which increases material costs and is too heavy. Therefore, in order to address the above problem, embodiments may additionally perform the following processes.

As shown in FIG. 2, the support manufacturing method may include injecting the second material 120 into at least a portion of the interior of the first injection-molded product 210. FIGS. 3(b) to 3(c) show the process of forming the second injection-molded product 220. FIGS. 3(b) to 3(c) may correspond to the step S102 shown in FIG. 2. FIG. 4(b) shows a cross-sectional view of a state in which the second material is injected into the first injection-molded product.

As shown in FIGS. 3(b) and 3(c), the forming the second injection-molded product 220 may include injecting the second material 120 into at least a portion of the interior of the first injection-molded product 210. That is, the second injection-molded product 220 is manufactured by forming a hollow inside the first injection-molded product 210 through the second material 120.

At this time, the second material 120 may be any material as long as it is different from the first material and the third material. The second material 120 may include, for example, gas, water, etc.

When the second material 120 is gas, the second injection-molded product 220 may be formed with reduced pressure imbalance. Additionally, the second injection-molded product 220 can minimize stress formed inside the second inj ection-molded product 220. When the second material 120 is water, the cooling time after injection of the second injection-molded product 220 can be shortened and manufacturing costs can be reduced. At this time, when a push-back type is used as the second material 120, manufacturing costs are further reduced. Hereinafter, for convenience of explanation, the case where the second material 120 is water will be described as an example.

As shown in FIG. 2, the support manufacturing method may include discharging (S103) the second material 120 from the first injection-molded product 210 to form the second injection-molded product 220 including the hollow 221. FIGS. 4(b) to 4(c) may correspond to the step S103 shown in FIG. 2. FIG. 4(c) shows a cross-sectional view of the second injection-molded product 220.

As described in the step S102 of FIG. 2, as the second material 120 is injected into the first injection-molded product 210, at least a portion of the first material 110 included in the first injection-molded product 210 may overflow. In this case, at least a portion of the first material 110 included in the first injection-molded product 210 may be discharged from the first injection-molded product 210.

At this time, as shown in FIG. 4(b), in order to assist discharge of the first injection-molded product 210, the second injection-molded product 220 may include one or more holes 222. The first material 110 pushed out by the second material 120 may be discharged to the outside of the second injection-molded product 220 through the hole 222 formed in the second injection-molded product 220.

Through the above-described structure, the support 2000 formed by the support manufacturing method according to the embodiments may provide a support that has a high cooling rate and reduces the cycle time.

Meanwhile, as shown in FIG. 5, the second material 120 may be injected into the first injection-molded product 210 through an inlet 410. At this time, the second material 120 may be injected at a first height (h1) with respect to the first injection-molded product 210. Additionally, as shown in FIG. 5, the second material 120 may be discharged from the first injection-molded product 210 through an outlet 420. At this time, the second material 120 may be discharged from a second height (h2) with respect to the first injection-molded product 210.

For example, when a thickness of the first injection-molded product 210 is constant, the first height (h1) is the height from the outer surface of the first injection-molded product 210 on the side where the inlet 410 is provided, toward the center point into which the second material 120 is injected. Additionally, the second height (h2) is the height from the outer surface of the second injection-molded product 220 on the side where the outlet 420 is provided, toward the center point from which the second material 120 is discharged. At this time, the first height (h1) and the second height (h2) are the same.

For example, the first height (h1) may be located higher than the second height (h2). In this case, the second material 120 is more smoothly discharged from the first injection-molded product 210 due to a difference in pressure between the inlet 410 side and the outlet 420.

For example, if the first height (h1) and the second height (h2) are not the same, a pressure difference may occur between the inlet 410 and the outlet 420. Depending on the pressure difference, the thickness of the second injection-molded product 220 on the side close to the inlet 410 and the thickness of the second injection-molded product 220 on the side close to the outlet 420 may be formed differently. In this case, there arises a problem in which a support having no pre-designed strength is formed.

According to the embodiments, the efficiency of water pressure control of the second material 120 can be increased because the first height (h1) and the second height (h2) are equally provided. Alternatively, for example, when the thickness of the first injection-molded product 210 is not constant, the height from the ground to the center point where the second material 120 is injected into the first injection-molded product 210 and the other height from the ground to the center point where the second material 120 is discharged from the first injection-molded product 210 may be the same. Through the above-described structure, the efficiency of controlling the water pressure of the second material 120 can be increased.

In addition, by adjusting the positions of the inlet 410 and the outlet 420 to be arranged horizontal, the support 2000 according to the embodiments may include a hollow 221 formed in the second injection-molded product 220 having error(s) within a constant or preset range. Accordingly, the second injection-molded product 220 may have first thickness at a first position of the second injection-molded product 220, and may have a second thickness at a second position of the second injection-molded product 220. Here, the first thickness and the second thickness are the same, and the second injection-molded product 220 may have a pre-designed equal thickness at the first and second positions.

Meanwhile, when adjusting the height of the inlet 410 and the height of the outlet 420, the inlet 410 or the outlet 420 may be exposed to the outside of the support 2000, which may impair the aesthetics. Furthermore, when the thickness of the first inj ection-molded product 210 is not constant, there may arise a problem in which shrinkage occurs in a relatively thick portion during the process of forming the second injection-molded product 220 with the second material 120. Additionally, when the thickness of the second injection-molded product 220 is not constant, a dichroic phenomenon may occur due to a difference in cooling speed between a relatively thick portion and a relatively thin portion. Therefore, in order to address this problem, embodiments may additionally perform the following processes.

As shown in FIG. 2, the method of manufacturing the support may include a forming (S104) a third injection-molded product 230 by covering at least a portion of the outer surface of the second injection-molded product 220 with the third material 130. FIG. 6(a) is a cross-sectional view of the second inj ection-molded product 220 formed through steps S 101 to S103 shown FIG. 2. In addition, FIG. 6(b) is a cross-sectional view of the third injection-molded product 230 formed by step S104 shown in FIG. 2.

As shown in FIG. 6, the third injection-molded product 230 may include a first material 110 with a hollow 221 formed therein, and a third material 130 formed to surround the outside of the first material 110.

The third material 130 may be formed to cover the hole 222 included in the second injection-molded product 220. Accordingly, one side of the hole 222 included in the third injection-molded product 230 may be connected to the hollow 220, and the other side of the hole 222 may be blocked by the third material 130. Additionally, the third material 130 may be formed to cover at least a portion of the outer surface of the second injection-molded product 220 including the hollow 221 formed in the second injection-molded product 220.

That is, the third injection-molded product 230 may solve defects or problems in the appearance of the second injection-molded product 220 through the third material 130. For example, if the inlet 410 is visible on the exterior of the second injection-molded product 220, or if there is a defect such as shrinkage or dichroic phenomenon on the outer surface of the second injection-molded product 220, the third injection-molded product 230 according to the embodiments may provide a method of improving the appearance by covering the corresponding inlet 410 or the defect (or flaw) with the third material 130. Accordingly, the embodiments can provide a high-quality appearance. At this time, the third material 130 is different from the second material 120. Additionally, the third material 130 is the same as or different from the first material 110. The third material 130 is, for example, resin. The third material 130 includes, for example, PP, ABS, PA6/66, POM, PPF, PE, PC, PS, PMMA, etc., or a mixture of two or more thereof.

The third injection-molded product 230 formed through FIGS. 2 to 6 is the same as or similar to the support 2000 described in FIG. 1. Since the support 2000 according to embodiments may include the third material 130, no separate work is required to improve the appearance. Additionally, the support 2000 may be configured such that the inlet 410, the outlet 420, and the hole 221 can be arranged at necessary positions without considering the appearance thereof. Additionally, the support 2000 may include the hollow 221 as described above, thereby reducing the amount of consumed materials and reducing the weight of the support 2000. Furthermore, when the support 2000 uses water as the second material 120, the cooling time required during the manufacturing process can be effectively reduced.

Various methods for forming the third material 130 on the outer surface of the second injection-molded product 220 will hereinafter be described with reference to the drawings.

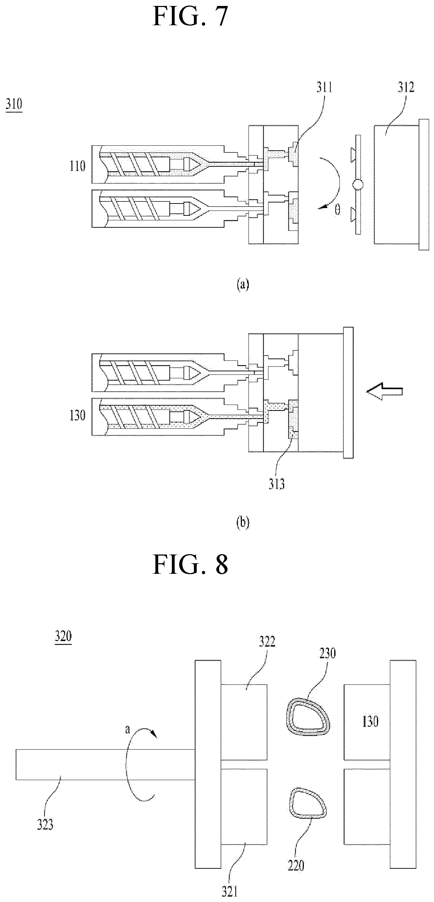

FIGS. 7(a) and 7(b) are views illustrating examples of a process of forming the third injection-molded product according to embodiments of the present disclosure.

FIG. 7 shows a process of using a double injection mold 310 to form a third material 130 on the outer surface of the second injection mold 220. In more detail, FIG. 7(a) shows a process of forming the second injection-molded product 220, and FIG. 7(b) shows a process of forming the third injection-molded product 230.

As shown in FIGS. 7(a) and 7(b), the double injection mold 310 may include a first mold 311, a support portion 312, and a second mold 313.

Referring to FIG. 7(a), the second injection-molded product 220 is formed between the first mold 311 and the support portion 312 when the first mold 311 and the support portion 312 correspond to each other. At this time, the hollow 221 included in the second injection-molded product 220 may be the second material 120 described in FIGS. 2 to 6. For example, the hollow 221 may be formed by injecting water into the mold. When the second injection-molded product 220 is formed, the support portion 312 may rotate together with the second injection-molded product 220 by a preset angle (θ).

As shown in FIG. 7(b), the rotated second injection-molded product 220 may correspond to the second mold 313. The third injection-molded product 230 may be formed by injecting the third material 130 into the second mold 313. At this time, the third material 130 may cover at least a portion of the outer surface of the second injection-molded product 230.

The third injection-molded product 230 formed through the above-described processes may be the same as or similar to the support 2000 described in FIGS. 1 to 6.

FIG. 8 is a view illustrating an example of a process of forming the third injection-molded product according to embodiments of the present disclosure.

FIG. 8 schematically shows a process of using a core index mold to form the third material 130 on the outer surface of the second injection-molded product 220.

Referring to FIG. 8, the core index mold 320 may include a first mold 321, a second mold 322, and a rotation unit 323 connected to the first mold 321 and the second mold 322. The first mold 321 may correspond to the second injection-molded product 220. The second mold 322 may correspond to the third injection-molded product 230.

The second injection-molded product 220 may be formed by injecting the first material 110 and the second material 120 into the first mold 321. The second injection-molded product 220 may include a hollow 221. At this time, the hollow 221 included in the second injection-molded product 220 may be the second material 120 described in FIGS. 2 to 7. For example, the hollow may be formed by injecting water into the mold.

The rotation unit 323 may rotate the second injection-molded product 220 at a position corresponding to the first mold 321 by a preset angle (a). The rotation unit 323 may enable the rotated second injection-molded product 220 to correspond to the second mold 322. The third injection-molded product 230 may be formed by injecting the third material 130 into the second mold 322. At this time, the third material 130 may cover at least a portion of the outer surface of the second injection-molded product 220.

The third injection-molded product 230 formed through the above processes may be the same as or similar to the support 2000 described in FIGS. 1 to 6 or 7.

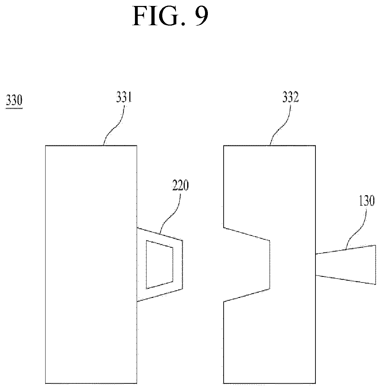

FIG. 9 is a view illustrating an example of a process of forming the third injection-molded product according to embodiments of the present disclosure.

FIG. 9 schematically shows a process of using an insert mold to form the third material 130 on the outer surface of the second injection-molded product 220.

Although not shown in FIG. 9, the first mold may correspond to the second injection-molded product 220. Additionally, as shown in FIG. 9, the insert mold 330 may include a moving unit 331 and a second mold 332. The second mold 332 may correspond to the third injection-molded product 230.

The second injection-molded product 220 may be formed by injecting the first material 110 and the second material 120 into the first mold 321. The second injection-molded product 220 may include a hollow 221. At this time, the hollow 221 included in the second injection-molded product 220 may be the second material 120 described in FIGS. 2 to 8. For example, the hollow 221 may be formed by injecting water into the mold.

The formed second injection-molded product 220 may move onto the moving unit 331. The moving unit 331 may insert the second injection-molded product 220 into the second mold 332. The third injection-molded product 230 may be formed by injecting the third material 130 into the second mold 332. At this time, the third material 130 may cover at least a portion of the outer surface of the second injection-molded product 220.

FIGS. 7 to 9 are merely examples of a method of forming the third material 130 on the outer surface of the second injection-molded product 220, and can be applied to any method in which the third material 130 is formed on the outer surface of the second injection-molded product 220. Therefore, for example, the third material 130 may be formed on the outer surface of the second injection-molded product 220 through a turn table method, a spin form method, or the like.

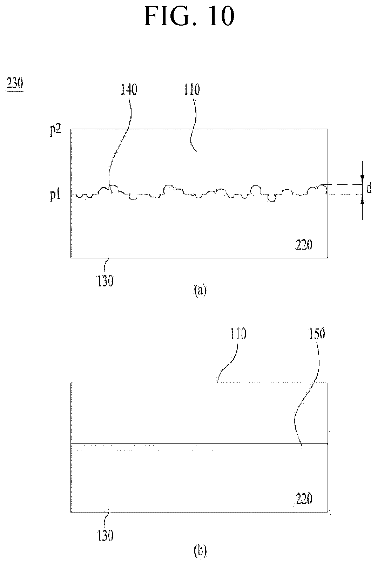

FIGS. 10(a) and 10(b) are enlarged views of the portion "A" shown in FIG. 6 according to embodiments of the present disclosure.

FIG. 10 shows a method for more stably bonding or adhering the third material 130 to the second injection-molded product 220.

FIG. 10(a) shows an example of a rough appearance of the second injection-molded product 220.

Referring to FIG. 10(a), the surface (p1) on one side of the second injection-molded product 220 is not flat. At this time, the surface (p1) on one side of the second injection-molded product 22-0 may refer to the surface (p1) on the third material 130 side from among the surfaces of the second injection-molded product 220. The second injection-molded product 220 may include a plurality of protrusions 140 of a preset size (d) or less on at least a portion of the surface (p1) on one side of the second injection-molded product 220. The second injection-molded product 220 may be a surface in contact with the third material 130 and may include a plurality of protrusions 140 of a preset size (d) or less on at least a portion of the surface (p1) on one side of the second injection-molded product 220. At this time, the preset size (d) may be calculated considering the performance, length, thickness and size of the support 2000, and the sizes of the molds of the first to third injection-molded products 210 to 230.

At this time, each of the protrusions 140 may include all of a protruding portion, a scratch, a hatched portion, an uneven portion, etc. and may be formed to roughen the surface (p1) of the second injection-molded product 220.

The second injection-molded product 220 may include the protrusions 140 to improve adhesion or coupling force with the third material 130. The second injection-molded product 220 may increase the area in contact with the third material 130 through the protrusions 140, thereby increasing adhesion or coupling force with the third material 130.

Meanwhile, as shown in FIG. 10(a), the surface (p2) on one side of the second injection-molded product 220 is flat. At this time, the surface (p2) on one side of the second injection-molded product 220 may refer to one surface of the third injection-molded product 230 from among the surfaces of the third injection-molded product 230. Here, the one surface may not contact the second material 120. The surface (p2) on one side of the third injection-molded product 230 may have a flatness value equal to or greater than a preset value. At this time, the preset value may be calculated considering the appearance of the support 2000 to be designed.

FIG. 10(b) shows an example structure formed to further include an adhesive layer 150 between the second injection-molded product 220 and the third material 130.

Referring to FIG. 10(b), the third injection-molded product 230 may further include an adhesive layer 150 that adheres and/or bonds the first material 110 to the third material 130. The adhesive layer 150 may be made of, for example, synthetic resin such as polyurethane, polyester and polyvinyl acetate (PVA), glass, organic ceramic, etc. The adhesive layer 150 may be formed by being coated on the second injection-molded product 220. Alternatively, the adhesive layer 150 may be formed by being injected onto the second injection-molded product 220. Alternatively, the adhesive layer 150 may be attached to the second injection-molded product 220 in the form of a film.

The second injection-molded product 220 and the third material 130 may be more strongly coupled or adhered to each other through the adhesive layer 150.

Although not shown, the embodiments of the present disclosure may provide an apparatus for manufacturing the support described in FIGS. 1 to 11. The manufacturing apparatus may include a mold, a first injection unit, an injection unit, and a second injection unit.

The mold may be formed in a support shape. The mold may include a first mold and a second mold. The first mold may have a first size, the second mold may have a second size, and the second size may be larger than the first size. At this time, the first mold may correspond to the size and shape of the first injection-molded product 210 or the second injection-molded product 220, and the second mold may correspond to the size and shape of the third injection-molded product 230.

The first injection unit may inject the first material 110 into the first mold. Accordingly, the first injection-molded product 210 may be formed.

The injection unit may inject the second material 120 into the first injection-molded product 210. Additionally, the injection unit may enable the second material 120 to be discharged from the first material 120. As a result, the second injection-molded product 220 may be formed. The second injection-molded product 220 may include a hole 221 prepared for overflow, an inlet 410 for injecting the second material 120, and an outlet 420 for discharging the second material 120. At this time, the hole, the inlet, and the outlet are the same as or similar to those described in FIGS. 2 to 6.

At this time, the first mold may further include protrusions so that the outer surface of the second injection-molded product 210 has a rough surface. The protrusions may roughen the outer appearance of the second injection-molded product 210. The second injection-molded product 210 may improve adhesion or coupling force with the third material 130 to be described later, through the protrusions.

Alternatively, the manufacturing apparatus may further include an adhesive layer injection unit. The adhesive layer injection unit may form an adhesive layer on at least a portion of the outer surface of the second injection-molded product 210 before the third material 130 is formed on the second injection-molded product 220. The adhesive layer may improve the adhesion or coupling force between the third material and the second injection-molded product 220.

The second injection unit may inject the third material 130 into the second mold. The second injection unit may inject the third material 130 into the second mold to cover at least a portion of the outer surface of the second injection-molded product 220. Through this, the third injection-molded product 230 is formed.

At this time, the manufacturing apparatus may further include an opening/closing unit. The opening/closing unit may prevent the third material 130 from entering the second injection unit through the hole, inlet, and outlet. Alternatively, the opening/closing unit may assist movement of the second material and/or the first material through the hole, inlet and outlet.

The third injection-molded product 230 formed through the manufacturing apparatus according to the embodiments is the same as or similar to the support 2000 described in FIGS. 1 to 11.

According to embodiments, a support with improved appearance, a method for manufacturing the support, and an apparatus for manufacturing the support are provided.

Additionally, the embodiments may provide a support having an improved appearance through two composite injection processes, a method for manufacturing the support, and an apparatus for manufacturing the support.

In addition, the embodiments may provide a support that is manufactured by forming an injection-molded product with a short cooling time and reduced material costs through a single injection process and forming an injection molded product with an improved appearance through two injection processes, and may also provide a method and apparatus for manufacturing the support.

In addition, the embodiments may provide a method and apparatus for efficiently manufacturing the support that is formed by combining a process in which the WIT (Water Injection Technology) process and a double injection process are used with another double injection process including a core index process, an insert process, and the like.

The detailed description of the support manufacturing method, the support, and the support manufacturing apparatus according to the embodiments of the present disclosure has been given to enable those skilled in the art to implement and practice the invention. Although the support manufacturing method, the support, and the support manufacturing apparatus according to the embodiments have been described with reference to the preferred examples, those skilled in the art will appreciate that various modifications and variations can be made in the present disclosure without departing from the spirit or scope of the present disclosure described in the appended claims. Accordingly, the present disclosure should not be limited to the specific examples described herein, but should be accorded the broadest scope consistent with the principles and novel features disclosed herein.

A person skilled in the art may practice unspecified embodiments by combining or substituting the disclosed embodiments, without departing from the scope of the present disclosure. It will be apparent to those skilled in the art that various modifications and variations can be made in the present disclosure without departing from the spirit or scope of the invention. Thus, it is intended that the present disclosure cover the modifications and variations of this invention provided they come within the scope of the appended claims and their equivalents.

## Claims

1. A method for manufacturing a support comprising:
forming a first injection-molded product using a first material;
forming a hollow by injecting a second material into at least a portion of the interior of the first injection-molded product;
forming a second injection-molded product by discharging the second material; and
forming a third injection-molded product by covering at least a portion of an outer surface of the second injection-molded product with a third material.

2. The method according to claim 1, wherein:
the second injection-molded product includes a hole, and
the forming the hollow includes:
injecting the second material into at least a portion of the interior of the first injection-molded product; and
if at least a portion of the first injection-molded product overflows from the first injection-molded product according to injection of the second material, discharging at least a portion of the first material through the hole.

3. The method according to claim 1, wherein:
the second injection-molded product is formed such that a support portion supporting the second injection-molded product corresponds to a first mold, and
the forming the third injection-molded product includes:
rotating the support portion formed with the second injection-molded product by a preset angle so as to allow the second injection-molded product to correspond to a second mold; and
injecting the third material into the second mold so as to cover at least a portion of the outer surface of the second injection-molded product.

4. The method according to claim 1, wherein:
a rotation unit is connected to a first mold corresponding to the second injection-molded product and a second mold corresponding to the third injection-molded product, and
the forming the third injection-molded product includes:
rotating, by the rotation unit, the second injection-molded product corresponding to the first mold such that the rotated second injection-molded product corresponds to the second mold; and
injecting the third material into the second mold to cover at least a portion of the outer surface of the second injection-molded product.

5. The method according to claim 1, wherein:
the first mold is formed to correspond to the second injection-molded product, and the second mold is formed to correspond to the third injection-molded product, and
the forming the third injection-molded product includes:
inserting the second injection-molded product into the second mold; and
injecting the third material into the second mold to cover at least a portion of the outer surface of the second injection-molded product.

6. The method according to claim 1, wherein:
the third material is formed to cover at least a portion of the outer surface of the second injection-molded product including the hollow.

7. The method according to claim 1, wherein:
injection of the second material is performed at a first height with respect to the first injection-molded product; and
discharge of the second material is performed at a second height with respect to the third injection-molded product,
wherein
the first height and the second height are equal to each other.

8. The method according to claim 1, wherein:
the second material is different from the first material and the third material, wherein
the first material is the same as or different from the third material.

9. A support comprising:
a first layer including a first resin, and configured to have a hollow therein; and
a second layer including a second resin, and configured to surround at least a portion of an outer surface of the first layer.

10. The support according to claim 9, wherein the first layer includes:
a hole, one side of which is connected to the hollow and the other side of which is blocked by the second layer.

11. The support according to claim 9, wherein the first layer includes:
a plurality of protrusions, each of which has a preset size or less on at least a portion of a surface where the first layer and the second layer are in contact with each other.

12. The support according to claim 11, wherein:
a surface of a side where the second layer is not in contact with the first layer has a flatness equal to or greater than a preset value.

13. The support according to claim 9, further comprising:
an adhesive layer disposed between the first layer and the second layer so as to bond the first layer and the second layer to each other.

14. The support according to claim 9, wherein
in a cross-section perpendicular to a direction of the hollow,
the first layer has a first thickness at a first position, and the first layer has a second thickness at a second position,
wherein the first thickness and the second thickness are equal to each other.

15. An apparatus for manufacturing a support comprising:
a mold formed to include a first mold having a shape of the support having a first size and a second mold having a shape of the support having a second size larger than the first size;
a first injection unit configured to inject a first material into the first mold;
an injection unit configured to inject a second material into at least a portion of the interior of the first material at a first height and to discharge the second material from at least a portion of the interior of the first material at a second height equal to the first height; and
a second injection unit configured to inject a third material into the second mold to surround at least a portion of an outer surface of the first material.
